# EUROPEAN PATENT APPLICATION

(11) **EP 4 559 312 A1**
(43) Date of publication of application: **28.05.2025**
(21) Application number: 24214475.6
(22) Date of filing: 21.11.2024
(51) Int. Cl.: A01M 7/00, B05B 9/01

(54) **TELESCOPIC NEBULIZER LANCE**

(30) Priority: 21.11.2023 IT 202300024630
(71) Applicant: Iacoponi, Daniele, 56038 Ponsacco Pisa (IT)
(72) Inventor: Iacoponi, Daniele, 56038 Ponsacco Pisa (IT)
(74) Representative: Leotta, Antonio

(57) **Abstract**

Outdoor and/or indoor nebulizer (1) comprising a delivery mouth (2), a nebulization nozzle (3) for dispensing a mist of nebulized working liquid, and a conduit (4) therebetween; said conduit (4) being extensible within a contracted rest configuration and an extended operating configuration to change the distance of the nebulization nozzle (3) from the delivery mouth (2). The nebulizer further comprises a drain valve (6) arranged upstream of the conduit (4) to act as an anti-drip device and simultaneously eliminate residual overpressures in the body of the nebulizer (1).

## Description

### TECHNICAL FIELD

**.** The object of the present invention is a nebulizer.

**.** The present invention further relates to an outdoor and/or indoor nebulization system comprising said nebulizer.

**.** The nebulization system is particularly suitable, although not uniquely designed, to generate a mist of water mixed with anti-mosquito products or other insecticidal products or even natural products based on essential oils, bacteria, air fresheners.

### BACKGROUND ART

**.** The known nebulization systems typically comprise a plurality of nebulization nozzles capable of generating a mist of nebulized droplets. The nebulizing effect is obtained by forcing the working liquid to pass through a very narrow orifice of the nebulization nozzles. In particular, unlike the known irrigation systems (sprayers or sprinklers), the nebulization nozzles (nebulizer or nozzle) are adapted to work at generally higher pressures, for example of the order of 10-100 bar and are usually made of brass or steel.

**.** Generally, nebulization systems of a droplet mist containing an anti-mosquito additive are known. Such systems are typically installed within a garden hedge in an attempt to intercept mosquitoes in their natural habitat

**.** However, the delivery of the aforesaid mist within the hedge, although advantageous from some points of view, does not fully solve the problem because the hedge itself, despite having bare branches therein and thus adapted to accommodate the tubes and nebulization nozzles, retains the mist therein, resulting in little dispersive effect of the anti-mosquito additive.

**.** The result often translates into an annoying experience for people in the garden because the anti-mosquito action turns out to be ineffective or at least very localized.

**.** On the other hand, it is also known to install the nebulization nozzles protruding outside the hedge itself, to take advantage of the dispersive effect of the air currents which usually form around hedges.

**.** However, this solution is also affected by drawbacks such as the poor aesthetic appeal of the protruding tubes, the poor safety for people who could collide with the aforesaid protruding nozzles and tubes, as well as the impossibility of pruning the hedge itself when the system is mounted.

**.** Therefore, the need is felt to provide an improved nebulization system solution.

### SUMMARY OF THE INVENTION

**.** An object of the present invention is to devise a solution to the needs complained of with reference to the prior art and to propose an improved nebulizer, as well as an improved nebulization system.

**.** This and other objects are achieved with a nebulizer according to claim 1, as well as with a system according to claim 10.

**.** Some advantageous embodiments are the object of the dependent claims.

**.** According to an aspect of the invention, a nebulizer comprises a delivery mouth, a nebulization nozzle for dispensing a mist of nebulized working liquid, and a conduit therebetween; said conduit being extensible within a contracted rest configuration and an extended operating configuration to change the distance of the nebulization nozzle from the delivery mouth.

**.** According to an embodiment, the nebulizer further comprises a drain port or drain pin and a drain valve for selectively arranging the drain port in fluid communication with said nebulization nozzle. The drain valve is preferably arranged upstream of the extensible conduit to allow its emptying when the drain port is in fluid communication with the nebulization nozzle.

**.** According to an aspect of the invention, the conduit body comprises a first body portion and a second body portion including the nebulization nozzle, the second body portion being extensible, e.g., telescopically, with respect to the first body portion against the action of a spring aimed at influencing the conduit towards the contracted rest configuration.

. According to an aspect of the invention, an outdoor and/or indoor nebulization system comprises a delivery pump and at least one nebulizer comprising a delivery mouth, a nebulization nozzle for dispensing a mist of nebulized working liquid, and a conduit therebetween; said conduit being extensible within a contracted rest configuration and an extended operating configuration to change the distance of the nebulization nozzle from the delivery mouth of the at least one nebulizer of the nebulization system.

. According to an aspect of the invention, an outdoor and/or indoor nebulization system comprises a delivery pump and a plurality of nebulizers each comprising a delivery mouth, a nebulization nozzle for dispensing a mist of nebulized working liquid, and a conduit therebetween; said conduit being extensible within a contracted rest configuration and an extended operating configuration to change the distance of the nebulization nozzle from the delivery mouth of the respective nebulizer of the nebulization system, wherein the system further comprises a delivery conduit between the delivery pump and the nebulizers of said plurality, a drain port and a drain valve for selectively arranging the drain port in fluid communication with the nebulization nozzles of the nebulizers of said plurality, wherein said drain valve is a single drain valve, arranged in the delivery conduit, and all the nebulizers of said plurality are in operating connection with said single drain valve.

. The delivery pump is preferably configured to bring the working liquid to a delivery pressure greater than 10 bar and preferably to a delivery pressure belonging to the range 15-20 bar.

### BRIEF DESCRIPTION OF THE FIGURES

. Further features and advantages of the invention will appear from the following description of embodiments, given by way of non-limiting example, with reference to the accompanying figures, wherein:
- Figure 1 is an axonometric view of a nebulizer, according to an embodiment;
- Figure 2 is a longitudinal sectional view of a nebulizer, according to an embodiment;
- Figures 3 A and 3 B show a nebulizer, according to an embodiment, in a contracted rest configuration and in an extended working configuration, respectively;
- Figure 4 is a vertical raised view of a portion of a nebulizer, according to an embodiment;
- Figure 5 shows a longitudinal section made according to the cutting plane indicated with the arrows V-V of Figure 4, in which a drain valve according to an embodiment is shown;
- Figure 6 schematically shows a nebulization system, according to an embodiment.

### DETAILED DESCRIPTION OF CERTAIN EMBODIMENTS

**.** In accordance with a general embodiment, a nebulizer 1 is provided comprising at least one delivery mouth 2 and at least one nebulization nozzle 3 for a working liquid.

**.** The nebulizer 1 is designed to force the working liquid to pass through an orifice (nebulization nozzle 3) of very narrow cross section with respect to the cross section of the delivery mouth 2, in order to dispense a mist from the nebulization nozzle 3.

**.** The nebulizer 1 is intended for use in outdoor environments, such as gardens, beaches or agricultural fields as well as indoors in premises comprising showrooms, warehouses, offices and terraces of bars and restaurants.

**.** In accordance with a preferred embodiment, the nebulizer 1 is adapted to be used for dispensing a mist of aqueous solution containing a mosquito repellent additive or other pesticide.

**.** The working pressure of the working liquid from the nebulizer 1 to the nebulization nozzle 3 is significantly greater than the atmospheric pressure, in other words it is greater than 10 bar to obtain the desired droplet mist. In accordance with some specific applications, the aforesaid working pressure belongs to the range from 15 to 20 bar. In accordance with some specific applications, the aforesaid working pressure belongs to the range from 70 to 140 bar.

**.** The nebulizer 1 is preferably provided in combination with at least one nebulization pump 13 and at least one valve, which may be inside the nebulizer 1 or mounted upstream thereof, for pressurizing the working liquid within the nebulizer 1.

**.** Between the delivery mouth 2 and the nebulization nozzle 3, the nebulizer 1 comprises a conduit 4 having an inner opening 40. The conduit 4 with its inner opening 40 is arranged to put the delivery mouth in fluid communication with the nebulization nozzle of the nebulizer.

. Advantageously, the conduit 4 is a conduit which is extensible within a contracted rest configuration and an extended configuration, to change the distance of the nebulization nozzle 3 from the delivery mouth 2. A nebulizer with nebulization nozzle of the pop-up type is therefore made, i.e., the nebulization nozzle can be repositioned thanks to the provision of the extensible conduit.

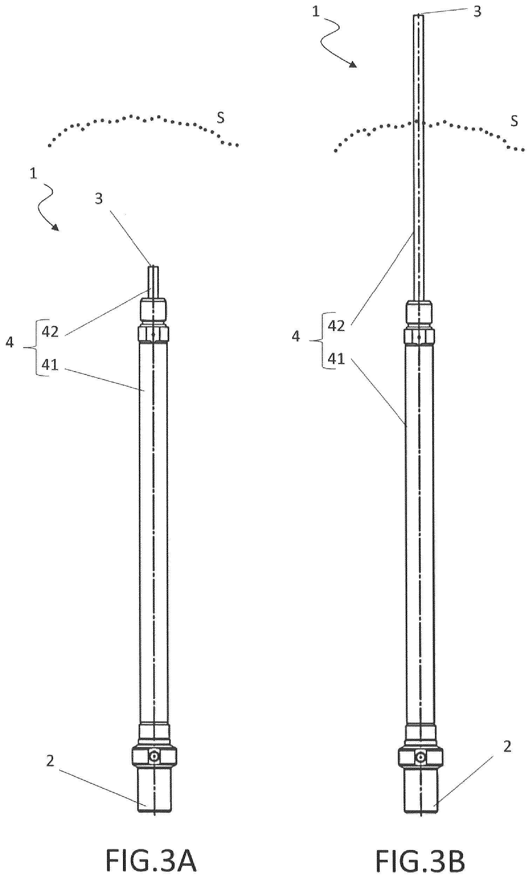

. Such a pop-up nebulizer is capable of arranging the nebulization nozzle 3 beyond a predeterminable level S or threshold S if necessary, as shown for example in Figure 3B. The pop-up type nebulizer is particularly adapted to be installed within a hedge, as it is at the same time discreet when in a contracted rest configuration hiding inside the dimensions of the hedge itself and thus hiding from view, to then be arranged in an extended configuration to dispense a nebulized product from the nebulization nozzle 3, for example comprising an anti-mosquito repellent.

. The extension of the conduit 4 and thus the change in distance between the nebulization nozzle 3 and the delivery mouth 2 can be about 15-30 centimetres.

. The extension of the conduit 4 and thus the change in distance between the nebulization nozzle 3 and the delivery mouth 2 preferably occurs under the action of the pressure of the working fluid counteracting an elastic element 21 arranged to influence the extensible conduit 4 towards its retracted rest configuration.

. The nebulizer 1 is particularly adapted to be mounted horizontally, i.e., with the conduit 4 extensible in a horizontal or sub-horizontal direction to project the nebulization nozzle 3 cantilevered beyond a substantially vertical threshold S or level S, for example the front face of a hedge. Of course, the nebulizer 1 is also adapted, if necessary, to be mounted vertically to protrude above or below and is also adapted to be mounted inclined, i.e., with the extension direction of the conduit 4 inclined both with respect to the vertical and with respect to the horizontal direction.

. The nebulizer 1 can belong to a nebulization system 10 comprising a plurality of nebulization nozzles 3 of the pop-up type, as explained in more detail hereafter in this disclosure.

. The extensible conduit 4 of the nebulizer 1 delimiting the inner opening 40 for the working liquid is preferably formed by two body portions 41, 42 which are mounted to each other so as to be telescopically extensible, wherein a first body portion 41 is integral with the delivery mouth 2 and a second telescopically extensible body portion 42 is integral with the nebulization nozzle 3.

. In accordance with an embodiment, the two body portions 41, 42 of the conduit 4 are two coaxially mounted and telescopically extensible tubes or sleeves. Guide means can be provided between the two body portions 41, 42 of the conduit 4, for example located near or at at least some of their ends. The guide means can comprise planar sliding surfaces and counter-surfaces respectively provided on the first and second body portions of the conduit and/or longitudinal guide teeth that engage in respective grooves. In accordance with an embodiment, rolling members are provided between the first portion 41 and the second portion 42 of the conduit body 4, such as rolling wheels or bearings, for example roller and/or ball bearings.

. The nebulizer 1 therefore preferably comprises an extensible casing thereof, which can be formed by at least two pieces, which encloses the conduit 4, the delivery mouth 2 and the nebulization nozzle 3. For example, the casing of the nebulizer is substantially cylindrical.

. The delivery mouth 2 can be arranged laterally on a side wall of the first body portion 41 without being coaxial with the inner opening 40 of the conduit 4, as well as the nebulization nozzle 3 is not necessarily coaxial with the inner opening 4 and can be oriented, for example, so as to direct the delivered mist towards a predefined expected target (for example, the outside of the hedge where the nebulizer 1 is installed).

. The extension of the conduit 4 of the nebulizer 1 can occur, instead of telescopically, by deploying a folded portion of the conduit itself, for example an extensible portion which is pleated, i.e., folded when in a contracted rest configuration.

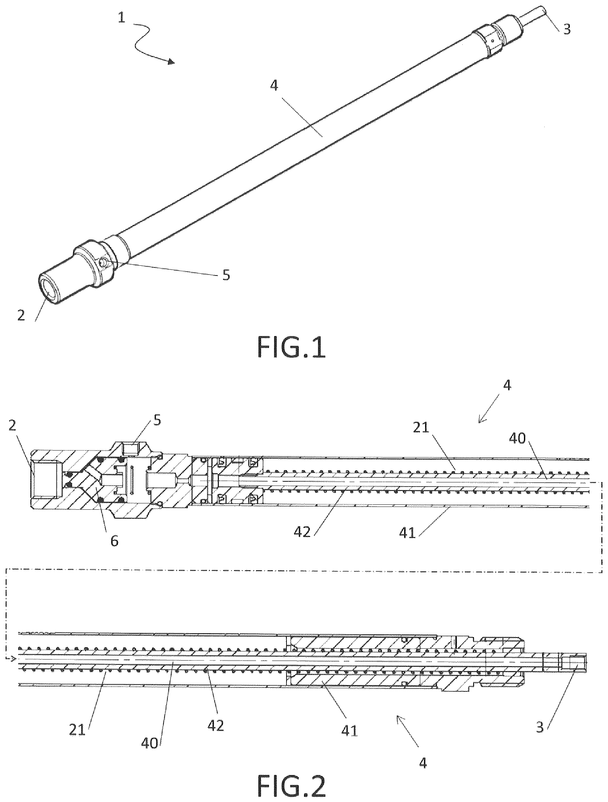

**.** As shown for example in Figure 2, in accordance with an embodiment, the inner opening 40 of the conduit 4 when the nebulization nozzle 3 is in a contracted/retracted rest configuration, can be formed entirely by the second portion 42 of the conduit body 4, whereas when the nebulization nozzle 3 is moved away and the conduit 4 extends, the inner opening 40 is formed in its section upstream from the first portion 41 of the conduit body.

**.** The first portion 41 of the conduit preferably has a larger bore than the second portion 42 of the conduit, and receives the second portion of the conduit in its inner opening which therefore has a larger bore than the inner opening of the second portion of the conduit itself.

**.** The elastic element 21 can be a coil spring fitted on the second extensible portion 42 of the conduit 4 which is loaded (in a compressive or tensile manner) during the extension of the second portion 42 of the body 4, to influence the conduit 4 in a contracted rest configuration.

**.** The extensible conduit 4 can be of the retractable type, i.e., when in a contracted rest configuration, the second body portion 42 with the nebulization nozzle 3 can be inside the first portion 41 of the conduit 4, avoiding protruding therefrom in a cantilevered manner. Alternatively, as shown for example in Figure 3 A, the second portion 42 of the conduit is dimensioned to project from the first portion 41 even when in rest configuration.

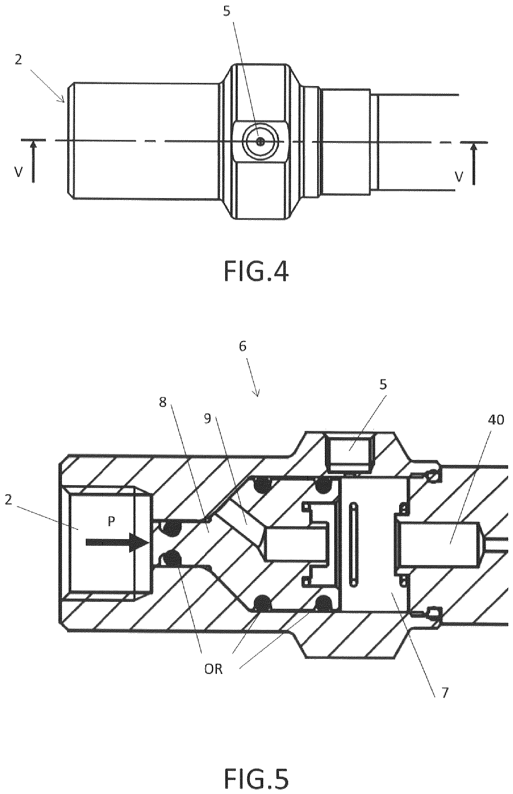

**.** In accordance with a preferred embodiment, as shown for example in Figure 4, the nebulizer 1 further comprises a drain port 5 or drain pin 5. The drain port 5 can be selectively arranged in fluid communication by means of a suitably provided drain valve 6. The drain port 5 can be arranged on the side surface of the conduit 4. Preferably, the drain port is arranged near the delivery mouth and acts thanks to the joint provision of the drain valve 6 as an anti-drip device of the nebulization nozzle 3, as it allows the emptying of the conduit 4.

**.** In accordance with an embodiment, the drain valve 6 is an automatic mechanical valve. In accordance with another embodiment, the drain valve 6 is a solenoid valve. For example, the drain solenoid valve can be timed, commanded by the deactivation of the delivery pump 13, or it can be controlled on the basis of information acquired by a working fluid pressure sensor.

**.** The drain valve 6 is designed to arrange said drain port 5 in fluid communication with said nebulization nozzle 3 when the delivery pressure of the working fluid is below a certain threshold, as shown for example in Figure 5. When the delivery pressure of the working fluid is above a certain threshold (for example 15 bar), a shutter 8 is pushed, against the action of an elastic device 7, by the action of the delivery pressure of the working fluid on the delivery mouth 2 (as schematically illustrated by the arrow "P") thanks to the delivery pump 13 of the system 10, achieving communication of the pressurized fluid between the delivery mouth 2 and the nebulization nozzle 3 thanks to the presence of a longitudinal channel 9 which crosses the shutter 8. The shutter 8 is therefore adapted to selectively put the nebulization nozzle 3 in communication with the delivery mouth 2 or with the drain port 5.

**.** A plurality of annular gaskets seals OR, for example o-rings, are preferably provided fitted on the shutter 8 to ensure fluid tightness and which can promote, by means of their elastic deformation in the longitudinal direction, the elastic action of the elastic device 7 on the shutter 8 of the drain valve 6.

**.** The conduit 4 can comprise a branch so that the nebulizer 1 can comprise a delivery mouth 2 operatively connected to a plurality of nebulization nozzles 3. To this end, a branch of the conduit 4 can be provided between the delivery mouth and the nozzles of said plurality. Preferably, the drain valve 6 is provided upstream of the branch and the extensible body portions 42 are provided integral with the respective nebulization nozzles 3, downstream of the branch 19.

**.** As mentioned above, the nebulizer 1 can belong to a nebulization system 10.

**.** The nebulization system 10 comprises at least one nebulizer 1 and a delivery pump 13. The delivery pump 13 is for example a vane pump. A valve 15 can be provided downstream of the delivery pump 13.

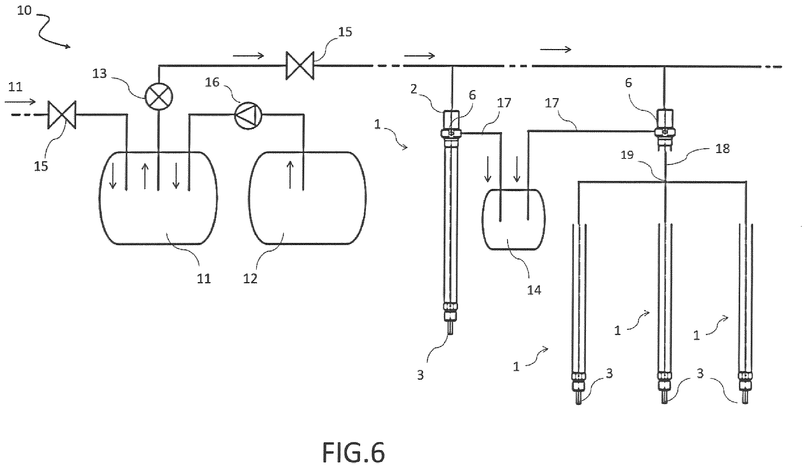

**.** As shown for example in Figure 6, the nebulization system 10 can comprise a mixing tank 11 in which a mains line (water supply) and a line coming from a product tank 12, for example an anti-mosquito repellent or pesticide product, converge. A mixing pump 16 can be provided to transport the product in the mixing tank 12.

**.** As shown for example in Figure 6, the nebulization system 10 can comprise a drain valve 6 for each nebulizer 1, or a single drain valve 6 can be mounted to serve a plurality of pop-up nebulization nozzles. Hybrid solutions among the above are also possible.

. In accordance with an embodiment, the system 10 comprises a plurality of nebulizers 1, a delivery conduit 18 between the delivery pump 13 and the nebulizers of said plurality, and a drain port 5 and a drain valve 6 for selectively arranging the drain port in fluid communication with said nebulization nozzle 3, wherein said drain valve is a single drain valve arranged in the delivery conduit 18 and all the nebulizers of said plurality are in operating connection with said single drain valve 6. To this end, the delivery conduit 18 can comprise a branch 19 between the drain valve 6 and the plurality of nebulizers. The drain valve 6 associated with the delivery tube 18 upstream of the nebulizer 1 favours the provision of a single drain valve 6 for simultaneously serving several nebulization nozzles 3.

. The drain port 5 of the at least one nebulizer 1 of the system 10 is preferably associated with a collection tank 14, for example by providing a drain conduit 17.

. Thanks to the characteristics described above, provided separately or jointly with one another in particular embodiments, it is possible to fully meet the aforementioned needs, obtaining the aforementioned advantages, and in particular:
- the nebulizer 1 can be provided in the form of an extensible cylinder having a rest length of about 20-50 centimetres and diameter of 1-3 centimetres adapted to work with delivery pressures of about 10-30 bar;
- the nebulization nozzle 3 can be made of brass or steel;
- a mist or cloud formed by droplets of aqueous solution is provided at a delivery pressure greater than 10 bar;
- working pressures of the order of 15-20 bar can impose dripping of the nozzle to drain the working liquid present while the presence of an anti-dripping device associated with the nozzle 3 requires high pressures to be maintained even in non-dispensing conditions, thus causing premature wear of the parts due to the over-stress to which they are subjected, whereby the presence of the drain valve allows this problem to be solved;
- particularly in the field of anti-mosquito nebulization systems for gardens, it is possible to arrange the nebulization nozzles when in rest configuration hidden within hedges or the foliage of shrubs and then, to prevent the anti-mosquito product from being nebulized within the hedges with little dispersive effect, it is allowed to expose the nozzles if necessary when in an operating configuration;
- therefore, an unsightly effect is avoided which would be caused by the nozzles exposed outside the hedge even when in the rest configuration, while ensuring nebulization in front of the hedge, best exploiting the dispersive effect of the air currents which form around the hedges; possible damage to the dispensing system due to the accidental severing of the protruding pipes during the cutting of the hedges and possible impacts of people against protruding nozzles with consequent possible injury are also avoided;
- a single drain valve can serve multiple nebulization nozzles at the same time;
- t is understood that as well as in the field of anti-mosquito nebulization systems for gardens, the nebulizer according to the invention is applicable in similar nebulization systems for other similar purposes such as warding off other types of insects or birds, refreshing, perfuming the environment, dispensing antibacterial or sanitizing products.

.It is understood, however, that the foregoing is of exemplary and non-limiting value, therefore any variations of detail which may become necessary for technical and/or functional reasons, are considered from now on to fall within the same protective scope defined by the following claims.

## Claims

1. Outdoor and/or indoor nebulizer (1) comprising:
- a delivery mouth (2);
- a nebulization nozzle (3) for dispensing a mist of nebulized working liquid; a conduit (4) therebetween, said conduit (4) being extensible within a contracted rest configuration and an extended operating configuration to change the distance of the nebulization nozzle (3) from the delivery mouth (2), said conduit (4) comprising a first body portion (41) and a second body portion (42) comprising the nebulization nozzle (3), the second body portion (42) being telescopically extensible with respect to the first body portion against the action of a spring (21) aimed at influencing the conduit (4) towards the contracted rest configuration;
- a drain port (5); and
- a drain valve (6) for selectively arranging the drain port in fluid communication with said nebulization nozzle (3).

2. Nebulizer according to claim 1, wherein the drain valve (6) is arranged upstream of the extensible conduit (4) to allow its emptying when the drain port (5) is in fluid communication with the nebulization nozzle (3).

3. Nebulizer according to claim 1 or 2, wherein the drain valve (6) comprises a shutter (8) having a longitudinal passage channel (9), the shutter (8) being adapted to selectively put the nebulization nozzle (3) in communication with the delivery mouth (2) or with the drain port (5).

4. Nebulizer according to claim 1, wherein the second body portion (42) has a smaller bore than the first body portion (41) of the conduit (4) and is received therein; and wherein when the nebulization nozzle (3) is in a contracted rest configuration, the second body portion (42) of the conduit (4) forms the entire inner opening (40) for the working fluid; and wherein the first body portion (41) and the second body portion (42) of the conduit (4) are two sleeves arranged coaxially and fitted on each other.

5. Outdoor and/or indoor nebulization system (10) comprising:
- a delivery pump (13); and
- a plurality of outdoor and/or indoor nebulizers (1) comprising a delivery mouth (2), a nebulization nozzle (3) for dispensing a mist of nebulized working liquid, and a conduit (4) therebetween; said conduit (4) being extensible within a contracted rest configuration and an extended operating configuration to change the distance of the nebulization nozzle (3) from the delivery mouth (2);
- a delivery conduit (18) between the delivery pump (13) and the nebulizers of said plurality;
- a drain port (5) and a drain valve (6) for selectively arranging the drain port in fluid communication with said nebulization nozzle (3);
wherein:
- said drain valve (6) is a single drain valve;
- said single drain valve (6) is arranged in the delivery conduit (18);
- all the nebulizers of said plurality are in operating connection with said single drain valve (6) arranged in the delivery conduit (18); and wherein, preferably, the delivery conduit (18) comprises a branch (19) between the drain valve (6) and the plurality of nebulizers.

6. System according to claim 5, wherein the at least one nebulizer (1) is oriented horizontally with the conduit (4) extensible in a horizontal or sub-horizontal direction to project the nebulization nozzle (3) cantilevered beyond a substantially vertical threshold (S) or level (S), for example the front face of a hedge.

7. System according to claim 5 or 6, wherein the delivery pump (13) is configured to bring the working liquid to a delivery pressure belonging to the range 15-20 bar.
